(19) **Europäisches Patentamt / European Patent Office / Office européen des brevets**

(11) **EP 2 674 669 A1**

(12) # EUROPEAN PATENT APPLICATION

(43) Date of publication:
**18.12.2013 Bulletin 2013/51**

(51) Int Cl.:
***F21V 8/00*** *(2006.01)*

(21) Application number: **13171383.6**

(22) Date of filing: **11.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.06.2012 TW 101121170**

(71) Applicant: **InnoLux Corporation**
**Chu-Nan, Miao-Li 350 (TW)**

(72) Inventors:
• **Chen, Yen-Liang**
  **Miao-Li County 350 (TW)**
• **Hu, Chia-Wei**
  **Miao-Li County 350 (TW)**

(74) Representative: **von Kreisler Selting Werner**
**Deichmannhaus am Dom**
**Bahnhofsvorplatz 1**
**50667 Köln (DE)**

(54) **Light guide plate and backlight module using the same**

(57)    A light guide plate, including a bottom surface, an incident surface, a plurality of guiding structures distributed on the bottom surface and extending along the incident surface is provided. The guiding structures have a trapezoidal shape including a bottom portion, a top portion, a first slant surface and a second slant surface disposed oppositely, wherein both of the first and second slant surfaces connect to the bottom portion and the top portion. The bottom portions of the guiding structures are protruded from the bottom surface of the light guide plate. Alternatively, a patterned structure is formed between the adjacent guiding structures and concave to the bottom surface of the light guide plate. A backlight module includes the light guide plate as described above and at least one light source disposed beside the light guide plate.

FIG. 1A (Prior Art)

EP 2 674 669 A1

FIG. 1B (Prior Art)

**Description**

BACKGROUND OF THE INVENTION

Field of the Invention

The invention relates in general to a light guide plate and a backlight module using the same, and more particularly to an edge-type light guide plate design capable of controlling emission direction and increasing the light extraction efficiency, and a backlight module using the light guide plate.

Description of the Related Art

Liquid crystal display device having matured technology is most commonly seen in the market. The liquid crystal panel being a main component of the liquid crystal display device has the advantages of power saving, light weight and slimness. The liquid crystal panel itself is not self-luminous, and therefore must be assisted by a backlight module with uniform surface light source for displaying an image. The backlight module could be divided into direct-type and edge-type according to the incident position of the light source. In the direct-type backlight module, the light source is disposed under the liquid crystal panel. In the edge-type backlight module, the light source is disposed beside the light guide plate.

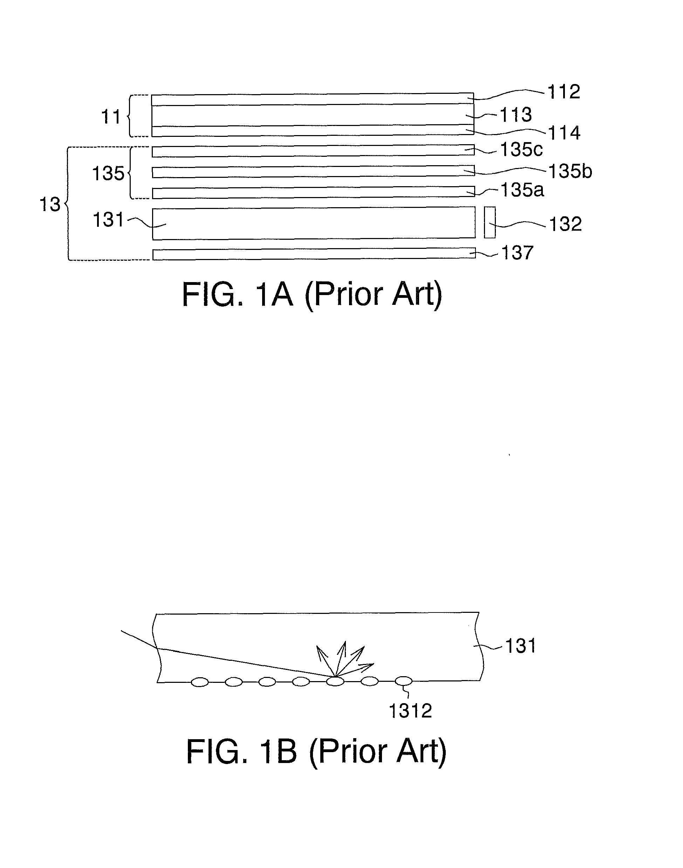

FIG. 1A shows a schematic diagram of a liquid crystal display  device with an edge-type backlight module. Currently, the liquid crystal display device 1 mainly includes a liquid crystal panel 11 and a backlight module 13 disposed under the liquid crystal panel 11. The liquid crystal panel 11 (the top and the bottom both have a polarizer) includes an upper substrate 112, a lower substrate 114 and a liquid crystal layer 113 interposed therebetween. The backlight module 13 includes a light guide plate (LGP) 131, a light source (such as a light bar having several LED point light sources or a CCFL) 132 disposed beside the light guide plate 131, several layer optical films 135 disposed above the light guide plate 131, and a reflective sheet 137 disposed under the light guide plate 131. The light guide plate 131 is mainly for guiding the light laterally entering the light guide plate 131 to be emitted from the liquid crystal panel 11. The optical film 135 is mainly for making a point light source or a line light source become a surface light source before the light is guided towards the liquid crystal panel, so that overall uniform illumination can be achieved. The brightness enhancement film (such as the optical film 135) used in the backlight module of a flat display normally includes a diffuser sheet 135a, a prism sheet 135b and a reflective dual brightness enhancement film (DBEF) 135c. Other brightness enhancement films, such as micro-lens brightness enhancement films or lenticular lens films, which are capable of collecting and uniformly distributing the light, can be used with different combinations of varieties and quantities to satisfy particular optical considerations.

Referring to FIG. 1B, a schematic diagram of a generally known  light guide plate guiding the light is shown. The light guide plate 131 scatters the light hitting the printed dot pattern 1312 to change the propagation direction of the light. However, such implementation has limited control on the propagation direction of the light.

The existing design of edge-type backlight module mostly adjusts the emergence angle by way of repetitively scattering or recycling the light, so that the light may be guided to a desired angle and direction. Through the recycling process of refraction and reflection of the light, the light can be guided to the front-view angle of LCD, but at the same time light output is continuously consumed. For the commonly used BEF, less than 40% of the light that can be normally emitted, and more than 50% of the light not matching the desired emergence angle (i.e. the angle for light capable of exiting from the light guide plate) will be reflected back and recycled. Methods such as recycling more than 50% of the light with a BEF, scattering the light with a printed dot pattern, and increasing the emergence angle of the light with a diffuser sheet all cause loss to light output. Therefore, the light extraction efficiency can be increased by reducing the occurrence of those factors.

SUMMARY OF THE INVENTION

The present invention is directed to a light guide plate and a backlight module using the same. Through the design of an edge-type light guide plate with guiding structure, the emission direction is controlled and the  light extraction efficiency of the backlight module is increased. By using the light guide plate of the invention, the quantity of brightness enhancement films could be reduced or even omitted.

According to one embodiment of the present invention, a light guide plate, including a bottom surface, an incident surface, and a plurality of guiding structures distributed on the bottom surface and extending along the incident surface, is provided. The guiding structure has a trapezoidal shape including a bottom portion, a top portion, a first slant surface and a second slant surface disposed oppositely, and each of the first and second slant surfaces connects to the bottom portion and the top portion. The bottom portions of the guiding structures are protruded from the bottom surface of the light guide plate. Alternatively, a patterned structure is formed between the adjacent guiding structures and concave to the bottom surface of the light guide plate.

According to another embodiment of the present invention, a backlight module, including the light guide plate as described above and at least one light source disposed beside the light guide plate, is provided.

The above and other aspects of the invention will become better understood with regard to the following detailed description of the preferred but non-limiting embodiment(s). The following description is made with reference to the accompanying drawings.

BRIEF DESCRIPTION OF THE DRAWINGS

FIG. 1A shows a schematic diagram of a liquid crystal display device with an edge-type backlight module;

FIG. 1B shows a schematic diagram of a generally known light guide plate guiding the light;

FIG. 2A shows a schematic diagram of a light guide plate and a light source of a backlight module of an embodiment;

FIG. 2B shows a schematic diagram of another light guide plate and a light source of a backlight module of an embodiment;

FIG. 3A shows a schematic diagram of a first guiding structure of a light guide plate of an embodiment;

FIG. 3B shows a schematic diagram of a second guiding structure of a light guide plate of an embodiment;

FIG. 3C shows a schematic diagram of a third guiding structure of a light guide plate of an embodiment;

FIG. 4A shows a schematic diagram of a fourth guiding structure of a light guide plate of an embodiment;

FIG. 4B shows a schematic diagram of a fifth guiding structure of a light guide plate of an embodiment;

FIG. 4C shows a schematic diagram of a sixth guiding structure of a light guide plate of an embodiment;

FIG. 4D shows a schematic diagram of a seventh guiding structure of a light guide plate of an embodiment;

FIG. 5 shows a partial schematic diagram of a light guide plate of an embodiment;

FIG. 6 shows a partial schematic diagram of another light guide plate of an embodiment;

FIG. 7 shows a partial schematic diagram of yet another light guide plate of an embodiment;

FIG. 8 shows a partial schematic diagram of further another light guide plate of an embodiment;

FIG. 9A shows a schematic diagram of a emergence angle ranging between -27°~27° generated from twice reflections of a light hitting a bottom portion and a slant surface of a guiding structure;

FIG. 9B shows a range of a main distribution of the light with an H/L ratio of a guiding structure being equal to 0.05, wherein a second structural angle $\varphi$ is determined according to the emergence angles -45° and 45°;

FIG. 9C shows a range of a main distribution of the light with an H/L ratio of a guiding structure being equal to 0.05 and a second structural angle $\varphi$ being determined according to the emergence angles 0° and-20°; and

FIG. 10 shows an actual distribution of recycled light with structural angles $\varphi$ and $\varphi'$ of a guiding structure being equal to 57° and 45° respectively.

DETAILED DESCRIPTION OF THE INVENTION

An edge-type light guide plate design capable of controlling the emission direction and increasing the utilization rate of the light and a backlight module using the light guide plate design are disclosed in the embodiments of the invention. According to the guiding structure design disclosed in the embodiments of the invention, the path of the light entering the light guide plate is adjusted and controlled, so that the quantity of brightness enhancement films enabling the light to be emitted from the front of the light guide plate can be reduced or omitted. Existing design requires the use of 3-4 brightness enhancement films for outputting the light.

A number of embodiments of the invention with detailed descriptions and accompanying diagrams are disclosed below. It is noted that details of the structures disclosed in the embodiments are for detailed descriptions only, not for limiting the scope of protection of the invention. Moreover, accompanying diagrams are simplified for highlighting technical features of the invention. The sizes and ratios used in the diagrams are not based on actual dimensions of the products, and are not for limiting the scope of protection of the invention.

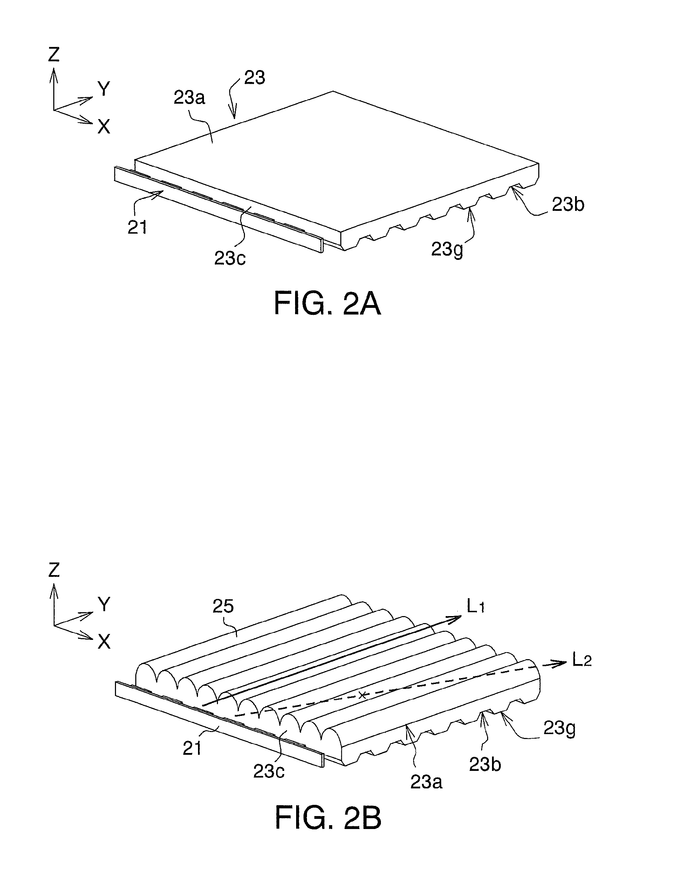

Referring to FIG. 2A, a schematic diagram of a light guide plate and a light source of a backlight module of an embodiment is shown. As shown in FIG. 2A, a light guide plate 23 is disposed beside a light source 21 (such as a light bar having several LED point light sources or a CCFL). The light guide plate 23 includes an emission surface 23a, a bottom surface 23b and an incident surface 23c. The light guide plate 23 includes a plurality of guiding structures 23g distributed on the bottom surface 23b and extending along the incident surface 23c (that is, the x-direction). In one embodiment, the guiding structure 23g has a trapezoidal shape. After the light emitted from the light source 21 enters the light guide plate 23 via the incident surface 23c, the light experiences twice reflections through the trapezoidal shape of the guiding structures 23g. The generation of twice reflections helps to adjust and control the optical path and increase the extraction efficiency of the light.

FIG. 2B shows a schematic diagram of another light guide plate and a light source of a backlight module of an embodiment. In comparison to FIG. 2A, a plurality of lenticular structures, such as lenticular lenses 25, are formed above the light guide plate 23 (on the emission surface 23a) of FIG. 2B and extended in a direction (that is, the y direction) perpendicular to the extending direction of the guiding structures 23g. The lenticular lenses 25 are adopted for limiting the propagation direction of the light so that the light will propagate along a direction L1 instead of a direction L2. The light propagating in the light guide plate 23 remains parallel to the lenticular lenses 25, so that the direction of the light is closer to the ideal value of the structure design and the efficiency of the light is increased. Except for the lenticular lenses 25, the structures above the light guide plate 23 are not subjected to any specific restrictions, and may be realized by a plate or a structure surface with V-shaped grooves.

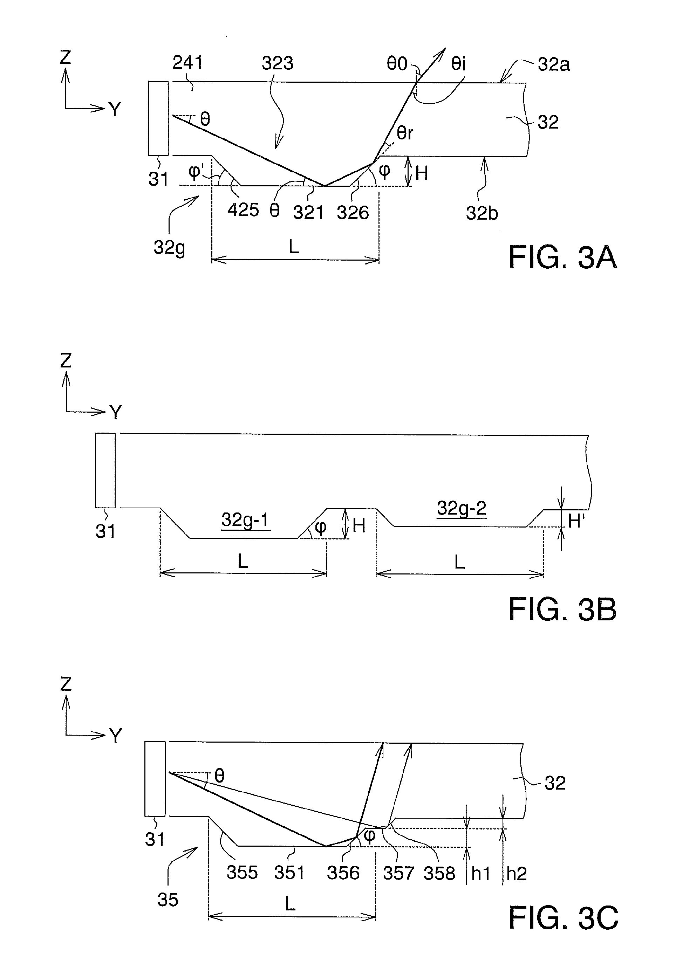

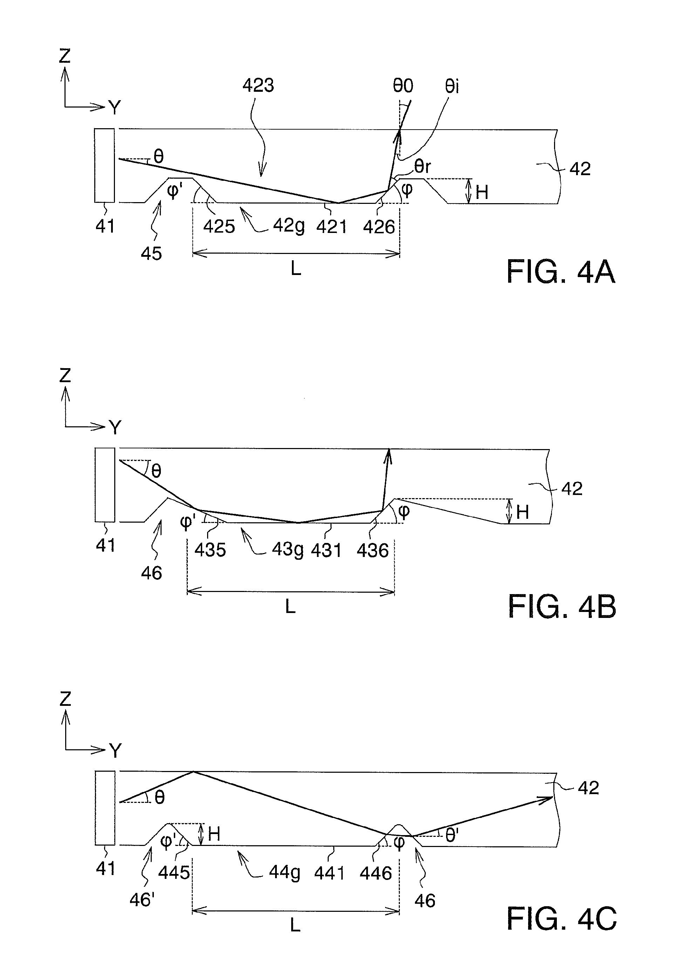

The following embodiments are exemplified by the guiding structures having a trapezoidal shape, and detailed descriptions are given in combination with accompanying diagrams. The guiding structure has a bottom portion, a top portion, and a first slant surface and a second slant surface disposed oppositely and connected to the bottom portion and the top portion respectively. The bottom portion of the guiding structure has various types of implementation. For example, the bottom portion of the guiding structure could be protruded from the bottom surface of the light guide plate (FIG. 3A- FIG. 3C), or could be formed by the bottom surface of the light guide plate (FIG. 4A- FIG. 4C). That is, a concave patterned structure having a trapezoidal or a triangular shape is formed between the adjacentguiding structures (FIG. 4A- FIG. 4C).

FIG. 3A shows a schematic diagram of a first guiding structure of a light guide plate of an embodiment. The diagram direction is formed by YZ axes. A light guide plate 32 disposed besides a light source 31 includes a plurality of guiding structures 32g distributed on a bottom surface 32b of the light guide plate 32. The guiding structure 32g has a trapezoidal shape. The guiding structure 32g has a bottom portion 321, a top portion 323, a first slant surface 325 and a second slant surface 326 disposed oppositely, and each of the first slant surface 325 and the second slant surface 326 connects to the bottom portion 321 and the top portion 323. The second slant surface 326 is farther away from the second light source 31 than the first slant surface 325. In the present embodiment, the guiding structure is protruded from the bottom surface 32b of the light guide plate 32, so the top portion 323 is connected to the bottom surface 32b of the light guide plate 32.

A depth H of the guiding structure 32g is defined as a vertical distance from the bottom portion 321 to the top portion 323. The top portion 323 has a length L along a light propagation direction (the y- direction). A first structural angle $\varphi'$ and a second structural angle $\varphi$ are defined as an exterior angle of first slant surface 325 and an exterior angle of the second slant surface 326, respectively. In the present embodiment, main parameters include H, L, $\varphi$, reference parameters include an incident angle $\theta$ of the light source 31, a structural reflection angle $\theta r$, a structural incident angle $\theta i$, and an emergence angle $\theta o$ of the light guide plate 32. Through the bottom portion 321 having a trapezoidal shape and a slant surface structure (i.e. the second slant surface 326), an incident light may experience twice reflections. For example, after a light enters the guiding structure 32g and generates reflection on the bottom portion 321 and the second slant surface 326 respectively, the light is twice reflected and outputted towards the liquid crystal panel. Through the optimization of the main design parameters, the emergence angle $\theta o$ is close to a desired angle (such as close to perpendicularity). It is preferably, but not limitedly, that the emergence angle $\theta o$ (i.e. the light exiting from the second light guide plate 32) is almost orthogonal to the emission surface 32a of the second light guide plate 32 by the optimization of main parameters.

In an embodiment, the second structural angles $\varphi$ on the guiding structures of the light guide plate 32 could be the same or different, and the first structural angles $\varphi'$ on the guiding structures of the light guide plate 32 could be the same or different.

The light not experiencing twice reflections through the slant surface structure will propagate in the light guide plate 32 along a direction parallel to the incident angle until hitting a next guiding structure to experience twice reflections and achieve an emergence angle which is nearly perpendicular to the emission surface 32a of the light guide plate 32.

Moreover, it is not necessary to design the guiding structures distributed on the light guide plate 32 with the same design parameters. For example, different guiding structures may have the same or different H/L ratios. FIG. 3B shows a schematic diagram of a second guiding structure of a light guide plate of an embodiment. The H/L ratio or the second structural angle $\varphi$ may be adjusted according to the distance from the guiding structure to the light source 31 or the size of the light guide plate 32 for adjusting the uniformity or extraction angle of the light. As shown in FIG. 3B, the incident side has a larger angle for extracting the light. In the present embodiment, the guiding structure 32g-1 closer to the incident side may adopt a larger H/L ratio in combination with the second structural angle $\varphi$ for controlling the extraction efficiency of the light. The guiding structure 32g-2 farther away from the incident side may adopt a smaller H/L ratio (with the parameter L being the same, H'<H). Alternatively, different ratios of H/L may be used alternately to increase the extraction efficiency of the light when the light source has a smaller incident angle $\theta$.

Moreover, variations may be made to the guiding structures. For example, a composite trapezoidal structure may be introduced to the guiding structure, so that the slant surface of the guiding structure may include at least one step or other step-like variations. The guiding structure may be realized as a cylinder or a multilateral cylinder viewed from atop to help extract the light output at a smaller incident angle and conveniently fabricate or adjust the size and density of the guiding structure. FIG. 3C shows a schematic diagram of a third guiding structure of a light guide plate of an embodiment. The guiding structure 35 has a first bottom portion 351, a first slant surface 355, a second slant surface 356, a second bottom portion 357 and a third slant surface 358. According to such design of FIG. 3C, the guiding structure has two units for creating twice reflections. The first unit has a first depth h1 and is composed of a first bottom portion 351, a first slant surface 355 and a second slant surface 356. The second unit has a second depth h2 and is composed of a second bottom portion 357 and a third slant surface 358. A light may experience twice reflections through the first bottom portion 351 and the second slant surface 356, or through the second bottom portion 357 and the third slant surface 358, wherein H= h1+ h2 (h1 denotes the first depth; h2 denotes the second depth).

Apart from the implementation that the guiding structure is protruded from the bottom surface of the light guide plate as disclosed in the above embodiment, modification and variation may be made to provide an alternative implementation. According to the alternative implementation, the guiding structure having a trapezoidal shape is formed by several concave patterns (trapezoidal or triangular shape) disposed on the bottom surface of the light guide plate for guiding the light to be outputted from the front through twice reflections. The two implementations are based on similar principles and achieve similar effects in controlling the propagation direction of the light and increasing the extraction efficiency of the light.

FIG. 4A shows a schematic diagram of a fourth guiding structure of a light guide plate of an embodiment. In comparison to the implementation of using the protruded structure having a trapezoidal shape for guiding the light as shown in FIG. 3A- FIG. 3C, the guiding structure 42g of FIG. 4A has a trapezoidal shape is formed by fabricating a concave pattern 45 on the bottom surface of the light guide plate 42. As shown in FIG. 4A, the concave pattern 45 has a trapezoidal shape, and several guiding structures 42g are formed on the bottom surface of the light guide plate 42 besides the light source 41. The guiding structure 42g has a trapezoidal shape, and includes a bottom portion 421, a top portion 423, a first slant surface 425 and a second slant surface 426 disposed oppositely, and each of the first slant surface 425 and the second slant surface 426 connects to the bottom portion 421 and the top portion 423. The second slant surface 426 is farther away from the light source 41 than the first slant surface 425. A depth H of the guiding structure 42g is defined as a vertical distance from the bottom portion 421 to the top portion 423. The top portion 423 has a length L along a light propagation direction (i.e. the y direction). A first structural angle $\varphi'$ and a second structural angle $\varphi$ are defined as an exterior angle of the first slant surface 425 and an exterior angle of the second slant surface 426, respectively. Besides, reference parameters include an emergence angle 8 of the light source 41, a structural reflection angle $\theta r$, a structural incident angle $\theta i$ and an emergence angle $\theta o$ of the light guide plate 42. After an incident light enters the guiding structure 42g and generates reflection on the trapezoidal bottom portion 421 and a slant surface structure (the second slant surface 426), the incident light is twice-reflected through the guiding structure 42g and then is outputted towards the liquid crystal panel. Through the optimization of the main design parameters, the emergence angle $\theta o$ is close to a desired angle (such as close to perpendicularity).

FIG. 4B shows a schematic diagram of a fifth guiding structure of a light guide plate of an embodiment. FIG. 4C shows a schematic diagram of a sixth guiding structure of a light guide plate of an embodiment. Similar to the guiding structure of FIG. 4A, the guiding structures 43g and 44g of FIG. 4B and FIG. 4C are formed by fabricating concave patterns 46 and 46' on the bottom surfaces of the light guide plates 42. The concave pattern 45 of FIG. 4A has a trapezoidal shape, and the concave patterns 46 and 46' of FIG. 4B and FIG. 4C have a triangular shape respectively.

As shown in FIG. 4B, the cross-section of the concave pattern 46 adopts an asymmetric triangular shape to reduce the slope of the first slant surface 435. After a light enters the guiding structure 43g, the light generates reflections on the first slant surface 435, the bottom portion 431 and the second slant surface 436 respectively before the light is existed from the light guide plate 42 and emitted towards the liquid crystal panel, so that the guiding structure 43g becomes more efficient in guiding the light. However, the guiding structure design of FIG. 4B is more complicated. Besides the factor of the second structural angle $\varphi$, it is required to take the relationship between the design parameters, such as the first structural angle $\varphi'$ and the second structural angle $\varphi$, into consideration.

In practical application, the first structural angle $\varphi'$ of FIG. 4B may be adjusted to a larger angle. As shown in FIG. 4C, a first slant surface 445 and a second slant surface 446 of the guiding structure 44g may be symmetric to each other. That is, the concave pattern 46' is a symmetric triangle structure for drawing back the light passing through the second slant surface 446 so that the light is less likely to contact a scattering type reflective sheet (not illustrated) disposed under the light guide plate 42 and end up with becoming scattered, jeopardizing the efficiency of the light source and affecting the propagation direction of the light.

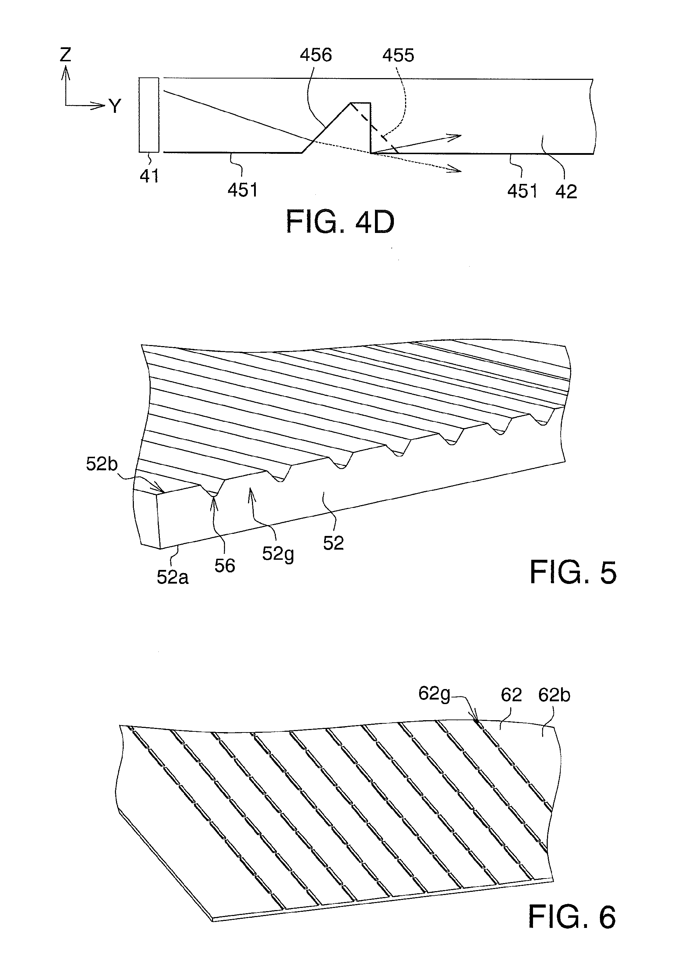

Referring to FIG. 4D, a schematic diagram of a seventh guiding structure of a light guide plate of an embodiment is shown. The angle of the first slant surface 455 of the guiding structure may be adjusted to be near 90° for drawing more light, which would otherwise contact the scattering type reflective sheet (not shown) disposed under the light guide plate 42, back to the light guide plate 42. As shown in FIG. 4D, if the angle of the triangular structure (illustrated in dotted line) is adjusted to be near 90° (illustrated in black solid line), the light which would otherwise be emitted towards the reflective sheet (an arrow sign illustrated in dotted line) will be drawn back to the light guide plate 42 (illustrated in solid line). According to the present design, the light is drawn back and propagate with a flatter angle (an arrow sign illustrated in solid line) in comparison to FIG. 4C and transmitted to a larger distance. Therefore, the present design of FIG. 4C is suitable for being used in a large-sized backlight module.

In the architecture disclosed in the above embodiments (FIG. 3A~FIG. 3C and FIG. 4A~FIG. 4D), the guiding structures on the light guide plate 32 do not have to be left-and-right symmetrical, and may adopt an asymmetric slant surface for conveniently adjusting the extraction efficiency of the light. The first structural angle φ' and the second structural angle φ are not subjected to any specific restrictions. The two angles may be the same or different from each other, and would be determined according to a cross-sectional structure parallel to the light and a desired magnitude of the emergence angle in practical application. In one embodiment, the first structural angle φ' of the guiding structure ranges between 30~45°, and the second structural angle φ ranges between 45~60°.

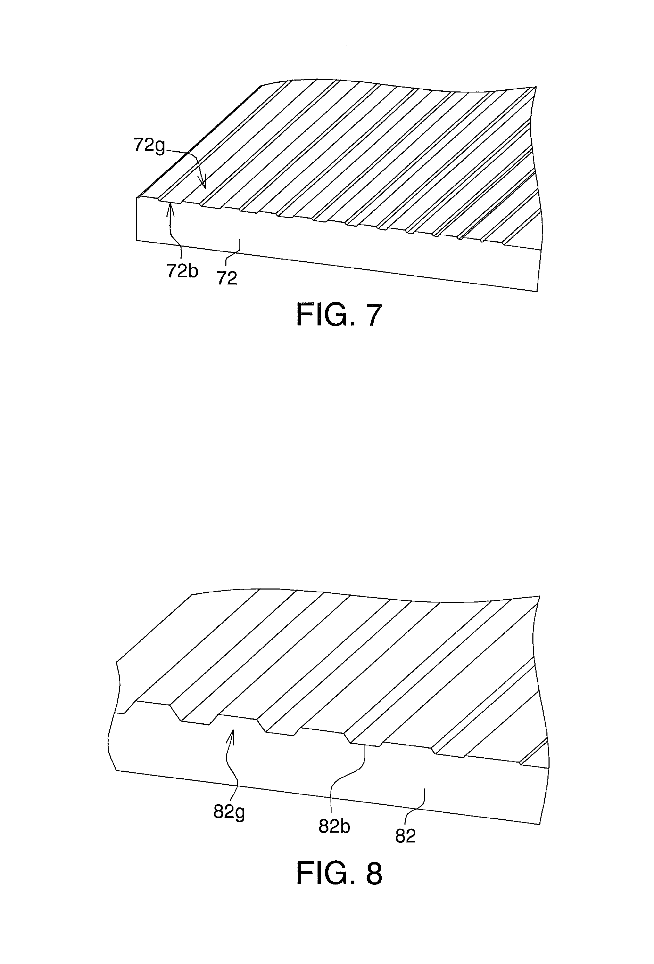

In the above embodiments, regardless of the guiding structure protruded from the bottom surface of the light guide plate (FIG. 3A- FIG. 3C) or the guiding structure formed by fabricating a concave pattern on the bottom surface of the light guide plate (FIG. 4A- FIG. 4C), necessary modifications and variations can be made to the overall distribution on the bottom surface of the light guide plate in accordance with the actual needs. Referring to FIG. 5, a partial schematic diagram of a light guide plate of an embodiment is shown. The guiding structure 52g formed by fabricating a concave pattern 56 on the bottom surface 52b of the light guide plate 52 is extended as a long column, and the length L of the guiding structure 52g can be adjusted according to the variation in the extraction efficiency of the light. For example, the closer to the light source a guiding structure is, the longer length L the guiding structure will be, and the farther away from the light source a guiding structure is, the shorter the guiding structure will be. Referring to FIG. 6, a partial schematic diagram of another light guide plate of an embodiment is shown. The guiding structures 62g distributed on the bottom surface 62b of the light guide plate 62 can have a truncated design and can be distributed on the bottom surface 62b in the form of an array of matrix. Referring to FIG. 7, a partial schematic diagram of yet another light guide plate of an embodiment is shown. The distribution density of the guiding structures 72g protruded from the bottom surface 72b of the light guide plate 72 varies with the distance from the guiding structure to the incident surface or the light source. The farther away from the incident surface or from the light source the guiding structures 72g are, the higher the density (/ denser distribution) of the guiding structures 72g. Referring to FIG. 8, a partial schematic diagram of further another light guide plate of an embodiment is shown. The H/L ratio of the guiding structures 82g protruded from the bottom surface 82b of the light guide plate 82 also varies with the distance from the guiding structure to the incident surface or the light source. The farther away from the incident surface or from the light source a guiding structure 82g is, the smaller H/L the guiding structure 82g will have (if the parameter L is fixed, then the parameter H is diminished).

Therefore, with regard to the overall distribution on the bottom surface of the light guide plate, the guiding structures can be realized by columns extended from and perpendicular to an edge of the light guiding plate. The guiding structures can have a truncated design, and can be randomly, alternately or regularly arranged. Also, the interval, the depth or the structural angle of the guiding structures can be adjusted according to the variation in the extraction efficiency of the light (such as the variation in the distance from the guiding structure to the emission side and incident side). The extraction efficiency of the light is optimized mainly through structure design, distribution density, and distribution manner according to the adjustment in the uniformity of the light.

Although the above embodiments are exemplified by single-sided lighting design (the light sources are disposed on one side of the light guide plate), the invention is not limited thereto, and the light sources can also be realized by dual-sided lighting design (the light sources are disposed on both sides of the light guide plate). Under such circumstances, individual design and overall arrangement of the guiding structures must be based on the factors and application conditions of dual-sided lighting design. Moreover, the guiding structures may be formed by way of printing, ink spraying, ejection, rolling, mechanical processing or laser processing. Moreover, without affecting the twice reflections of the incident light, the corner at the trapezoid can be an acute angle, a fillet or a chamfer. In one embodiment, the corner of the guiding structure is an acute angle.

Therefore, anyone who is skilled in the technology will understand that the guiding structures can be modified or adjusted to optimize the design parameters according to the needs and conditions in practical application, and are not limited to the implementations disclosed in above embodiments.

<Design Parameter of Guiding Structure>

Again, referring to FIG. 4A. Main parameters include H, L, φ, and φ', wherein a depth H denotes a vertical distance from the bottom portion 421 to the top portion 423; a length L denotes a length of the top portion 423 along the propagation direction of the light; a second structural angle φ denotes an exterior angle of the second slant surface 426; a first structural angle φ' denotes an exterior angle of the first slant surface 425. Reference parameters include an incident angle θ of the light source 41, a structural reflection angle θr, a structural incident angle θi and an emergence angle θo of the light guide plate 42. The emergence angle θo is obtained by the following calculations. Ideally, the emergence angle θo is an angle close to perpendicularity (the closer to 0° the better).

Given that $\phi = \theta + \theta_r \Rightarrow \theta_r = \phi - \theta$ $\theta_i = 90 - \phi - \theta_r \Rightarrow \theta_i = 90 + \theta - 2\phi$ Sin $\theta_i \times n_i =$ Sin $\theta_o \times n_o$, the closer to 0° the incident angle θi is, the closer to 0° the emergence angle θo will be. When the incident angle θ of the light source satisfies

the condition $\theta < \tan^{-1}\left(\dfrac{H}{L - H \times \cot\phi}\right)$, the light output cannot be emitted through the structure. When the incident angle θ of the light source satisfies the condition $\theta \geq \tan^{-1}\left(\dfrac{H}{L - H \times \cot\phi}\right)$, the light would be exited from the light guide plate.

It is assumed that the light source is realized by Lambertian light emitting diodes. According to the law of refraction, the incident angle θ of the light entering the light guide plate is between 0°~42.1°. If the light guide plate is made from PMMA, the index of refraction is 1.49, and the critical emergence angle (total reflection angle) is 42.2°. The following calculation of $\theta_i$ or $\theta_o$ is conducted within an interval: $0° \leq \theta \leq 42°$. Based on the above data, there are three conditions regarding the possible propagating paths of the light reflected by the guiding structure:

<Condition 1: light experiences twice reflections after hitting a structural bottom portion>

Referring to FIG. 4A. After the light enters the guiding structure and hits the bottom portion 421 and a slant surface structure (the second slant surface 426), the light experiences twice reflections and is then outputted. However, when the incident angle of the light source satisfies the condition $\theta < \tan^{-1}\left(\dfrac{H}{L - H \times \cot\phi}\right)$, the light output cannot exit from the structure, and condition 1 will not occur.

The emergence angle θo of condition 1 can be obtained from the equation sin $\theta_o$ = sin(90 + θ - (2×φ))×1.49 and the incident angle θ of the light source. A number of calculation examples are illustrated in Table 1.

Table 1

| Structure H/L Ratio | Structural angle φ | Range of Extraction Incident Angle θ | Range of Emergence Angle θo |
|---|---|---|---|
| 0.05 | 46.55° | 3.1°~42° | 0°~69.3° |
| 0.05 | 60° | 3°~42° | -42.5°~18° |
| 0.1 | 48.15° | 6.3°~42° | 0°~60.4° |
| 0.1 | 57° | 6.2°~42° | -27°~27° |
| 0.15 | 49.9° | 9.8°~42° | 0°~52.6° |
| 0.2 | 51.7° | 13.4°~42° | 0°~45.5° |

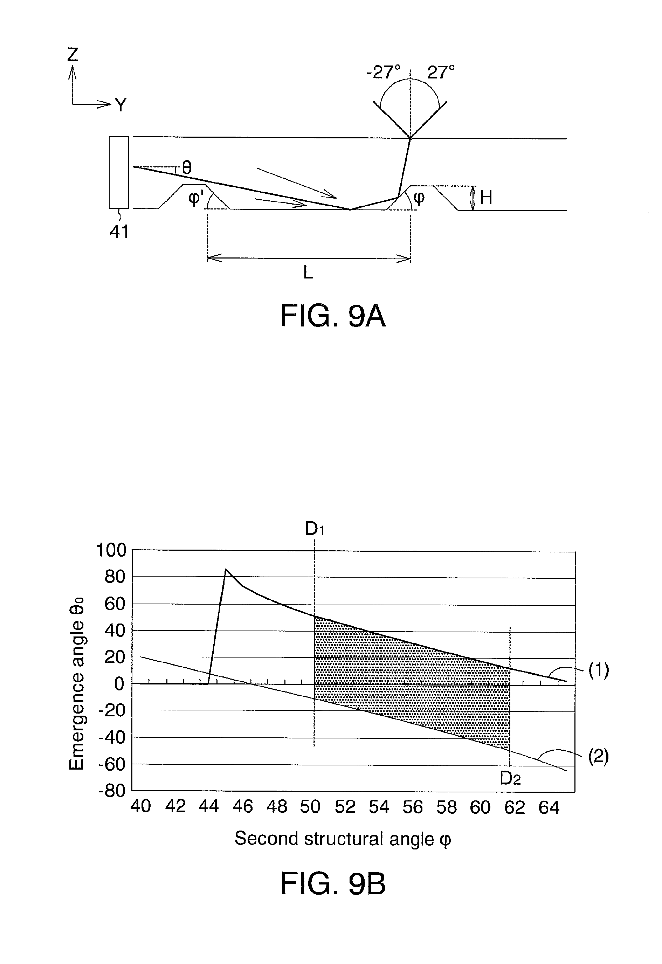

Table 1 illustrates a number of main implementations in the extraction of the light, wherein the range of the emergence angle θo is a crucial factor. Let the values on the fourth row of Table 1 be taken for example. The emergence angle θo obtained from the calculations of possible lights with simulation software falls within the range of -27°~27°. If a preferred emergence angle falls within the range of -45°~45°, then the parameter can be considered. FIG. 9A shows a schematic diagram of an emergence angle ranging between -27°~27° generated from twice reflections of a light hitting a bottom portion and a slant surface of a guiding structure.

If curve fitting is applied on the above results of calculation, the range of emergence angle is elaborated with FIG. 9B. It is assumed that the backlight module adopts one-sided lighting design. FIG. 9B shows a range of a main distribution of the light with an H/L ratio of a guiding structure being equal to 0.05, wherein a second structural angle φ is determined according to the emergence angles -45° and 45°. The extreme range of the emergence angle is used for fitting two curves, namely, curve (1) and curve (2). Curve (1) denotes the light output of an incident light which enters the incident plane at an angle close to a critical angle. Curve (2) denotes the light output of an incident light nearly parallel to the incident plane. That is, the main light output falls in the area between curves (1) and (2). If the emergence angle θo is between -45°~45°, the two angles and the two curves (1) and (2) may form a region (such as the dotted area in the diagram) conformed to design requirements. Line D1 and curve (1) intersect when the emergence angle is equal to 45°. Line D2 and curve (2) intersect when the emergence angle is equal to -45°. FIG. 9B shows that when the H/L ratio of the guiding structure is equal to 0.05 and one-sided lighting design is adopted, the second structural angle φ preferably falls within the range of 50°~62°, and the second structural angle φ is preferably equal to 56° when balance is considered. Although different H/L ratios will lead to different results (the curves of a range of a main distribution of the light will be different), design parameters close to actual needs can be obtained from the above calculations.

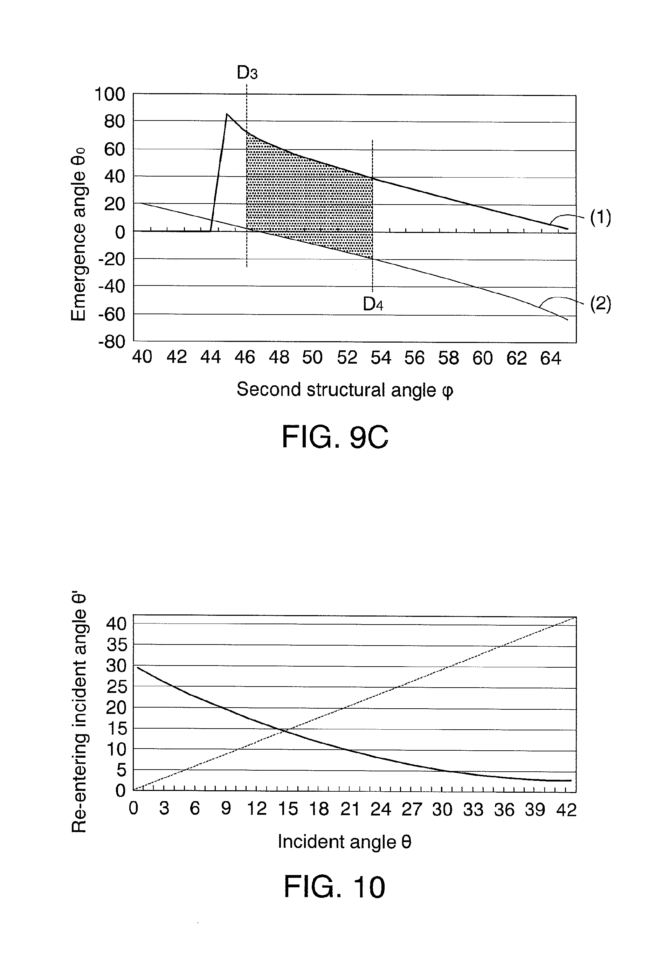

If the backlight module adopts dual-sided lighting design, that is, the incident light may enter from two opposite directions, the possibility of complementary lighting (two opposite slant surfaces of the guiding structure provide reflection for the incident light entering from two lateral sides respectively) must be considered. Meanwhile, the above balance problem is not considered, the emergence angle θo at one side of the range is set as 0°~-20°, and the emergence angle on the other side of the range is not subjected to any specific restrictions. Referring to FIG. 9C, a range of a main distribution of the light with an H/L ratio of a guiding structure being equal to 0.05 and a second structural angle φ being determined according to the emergence angles 0° and-20° are shown, wherein the second structural angle φ is determined by the emergence angle ranging between 0°~-20°. Curves (1) and (2) of FIG. 9C are identical to that of FIG. 9B. If the emergence angle θo is desired to fall within the range of 0°~-20°, the two angles and the two curves (1) and (2) may form a region (such as the dotted area in the diagram) conformed to design requirements. Line D1 and curve (1) intersect when the emergence angle is equal to 0.05°. Line D2 and curve (2) intersect when the emergence angle is equal to -20°. FIG. 9C shows that when the H/L ratio of the guiding structure is equal to 0.05 and dual -sided lighting design is adopted, the second structural angle φ preferably falls within the range of 46.5°~53.5°.

It is assumed that the benefit of the extraction of the light and the possibility of application are taken into consideration. Based on the results of calculations and examples of determination as disclosed above, in an embodiment, the second structural angle φ of the trapezoidal guiding structure ranges between 45°~65°.

<Condition 2: a light is outputted from a second slant surface at a second structural angle φ>

Referring to FIG. 4C. The light enters the guiding structure and then is outputted from the second slant surface 446. Such condition has two possibilities: (a) the outputted light is drawn back by the reflective sheet  disposed under the light guide plate; (b) the light may be refracted and then recycled to the light guide plate if the light is close enough to the concave trapezoidal or triangular structure.

In possibility (a), the light is reflected back by the reflective sheet in a scattering manner. Since the scattering of the light cannot be estimated by using physics formulas, the calculation is not shown here. However, if the concave structure is small enough (close to a triangular shape), it can be obtained from the simulation results that the total light output of possibility (a) is less than 30% of the total light output of condition 2.

The result of possibility (b) can be obtained from the equation $\theta' = 90 - \varphi' - \sin^{-1}(\sin(180 - \sin^{-1}(\sin(90 - \varphi - \theta) \times 1.49) - \varphi - \varphi')/1.49)$ and then the cyclic incident angle can be calculated accordingly. A number of calculation examples are listed in Table 2.

Table 2

| Second Structural Angle φ | First Structural Angle φ' | Range of Extraction Incident Angle θ | Range of Re-entering Incident Angle θ' |
|---|---|---|---|
| 45° | 30° | 3°~42° | 17.8°~47° (not relative value) |
| 50° | 40° | 0°~42° | 7.8°~38.8° (not relative value) |
| 54° | 40° | 0°~42° | 7.8°~33.6° (not relative value) |
| 50° | 35° | 0°~42° | 12.8°~31.2° (not relative value) |
| 55° | 35° | 0°~42° | 12.8°~34.6° (not relative value) |
| 57° | 45° | 0°~42° | 2.8°~29.4° (not relative value) |

The light which cannot be used in condition 1 is recycled and it is possible that the recycled light can become an output light of condition 1. By applying the range to condition 1, actual distribution region of the output light can thus be estimated.

It is assumed that the emergence angle would fall within the range of -45°~45°. Let the last row of Table 2 in which the structural angles φ and φ' are equal to 57° and 45° respectively be taken for example. FIG. 10 shows an actual distribution of recycled light with structural angles φ and φ' of a guiding structure being equal to 57° and 45° respectively. FIG. 10 shows that the re-entering incident angle θ' of the cyclic incident light falls within the range of 2.8°~29.4°. The expected convergence angle of the maximum light output is about 14.2° (the intersection between the curve and the diagonal line D5). By applying the result to condition 1, it can be estimated that the light output falls within the range of -32°~8°.

Suppose the benefit of the extraction of the light and the possibility of application are taken into consideration. Based on the results of calculations and examples of determination as disclosed above, in an embodiment, the first structural angle φ' of the trapezoidal guiding structure ranges between 30°~45°.

<Condition 3: a light proceeds further after having been reflected by a first slant surface at a first structural angle φ'>

In condition 3, the optical path has many possibilities as follows: Possibility (a): the light hitting the first slant surface at the first structural angle φ' is reflected by the bottom side as a cyclic incident light (FIG. 4B) entering again at a re-entering incident angle θ'. Possibility (b): the light hitting the first slant surface at the first structural angle φ' is reflected and outputted by the second slant surface at the second structural angle φ. Possibility (c): the light hitting the first slant surface is reflected at the first structural angle φ' and becomes a cyclic incident light entering again at a re-entering incident angle θ'.

The calculation criterion is φ'<(θ. Wherein, under the condition of possibility (a), the re-entering incident angle θ' is expressed as: θ' = 2φ'-θ; under the condition of possibility (b), the emergence angle θo is expressed as: $\theta_o = \sin^{-1}$ (sin(90 + 2φ'-2φ - θ) × 1.49). under the condition of possibility (c), the condition 2φ' < θ is satisfied, and the re-entering incident angle 8' is expressed as: θ' = θ - 2φ'. Possibility (c) is considered only when the first structural angle φ'< 20°.

If the benefit of condition 3 is combined with condition 2, the main angle will fall within the range of 30°~40°. If the angle is smaller than the range of 30°~40°, the recycling effect of condition 2 must be sacrificed. The light will be further narrowed and the transmission distance is extended farther.

Under such architecture, the first structural angle φ' still ranges between 30°~45° in an embodiment.

In condition 1, the light satisfying the condition $\theta < \tan^{-1}(\dfrac{H}{L - H \times \cot\phi})$ will not be extracted but may be recycled as disclosed in condition 2. In condition 3, the light is apt to change its angle. The best design has to incorporate the three conditions.

To summarize, in an embodiment, the second structural angle φ of the trapezoidal guiding structure range between 45°~65°, and the first structural angle φ' ranges between 30°~45°. In terms of parameter design, the structure function of the structural length L and the structural depth H is mainly for adjusting a ratio of light output, the structure function of the second structural angle φ is mainly for adjusting a emergence angle, and the structure function of the first structural angle φ' is mainly for increasing the cyclic light and fine-tuning an incident angle. In an embodiment of one-sided lighting design, the first structural angle φ' of the guiding structure is not equal to the second structural angle φ (that is, the guiding structure design is left-and-right asymmetric). In an embodiment of dual-sided lighting design, the first structural angle φ' of the guiding structure may be equal to the second structural angle φ (that is, the guiding structure design is left-and-right symmetric) or not equal to the second structural angle φ (that is, the guiding structure design is left-and-right asymmetric). When the guiding structure design is left-and-right symmetric, the calculation of the design parameters is mainly based on condition 1 (that is, mainly for the second structural angle φ, and the first structural angle φ' is set to be equal to φ), but the invention does not impose further restriction.

Furthermore, the relationship between the structural length L and the structural depth H is considered. Since the light output cannot outputted through the structure when the incident angle θ satisfying the condition $\theta < \tan^{-1}(\dfrac{H}{L - H \times \cot\phi})$, and the smaller the H/L ratio, the smaller the loss of light output. However, when the H/L ratio is too small, the light output that can be extracted from the guiding structure would be small as well. Let the variation in the H/L ratio be used as a variable. Results of the second structural angle φ which enables the extracted incident light experiencing twice reflections through the guiding structure to have better emergence angle after the light is outputted are illustrated in Table 3.

Table 3

| Structure H/L Ratio | Structural Angle φ | Range of Extraction Incident Angle θ | Range of Emergence Angle θo |
|---|---|---|---|
| 0.05 | 46.55° | 3.1°~42° | 0°~69.3° |
| 0.1 | 48.15° | 6.3°~42° | 0°~60.4° |
| 0.15 | 49.9° | 9.8°~42° | 0°~52.6° |
| 0.2 | 51.7° | 13.4°~42° | 0°~45.5° |

The results illustrated in Table 3 are based on the conditions that light sources are disposed at two lateral sides, and the angle which requires the largest light output in the front of the light guide plate is equal to 0°. In practical application, only when an optimum H/L ratio is combined with backlight module design will optimum parameters (such as length and width of the light guide plate and distribution of the guiding structures) be obtained. Appropriate H/L ratios can be adjusted according to the needs in practical application and distribution of the guiding structures. In an embodiment, the H/L ratio is such as lower than 0.2 to avoid a large loss in light extraction angle. In an embodiment, the H/L ratio is between about 0.05-0.2. In another embodiment, the H/L ratio is between about 0.1-0.15, the structural length L is about 100um and the structural depth H is between about 10~15um. The invention does not impose any specific restrictions on the H/L ratio.

In practical application, the structural length L and the structural depth H may be used for adjusting luminance uniformity. For example, the structural length L is larger when the guiding structure is closer to the light source and is smaller when the guiding structure is farther away from the light  source. The structural depth H is normally fixed. However, when the variation in the structural length L is insufficient to adjust the uniformity of the light to a predetermined level, the structural depth H may be adjusted to compensate the insufficient adjustment of the structural length L. For example, the structural depth H is smaller when the guiding structure is closer to the light source and the structural depth H is larger when the guiding structure is farther away from the light source.

Based on the concepts disclosed in the invention, in many embodiments disclosed above, the propagation direction of the light can be guided to be nearly perpendicular to the emission surface of the light guide plate, the design parameters of the guiding structure can be accurately estimated and the structure design can be determined. One example is described below. It is assumed that the structure H/L ratio is equal to 0.15 and the second structural angle φ is equal to 49.9°. After a light emitted from the light source enters the guiding structure at an incident angle θ of 9.8° and experiences twice reflections, the light would be guided to a direction perpendicular to the emission surface of the light guide plate, and other incident lights experiencing twice reflections through the guiding structure would be uniformly distributed and outputted from the emission surface of the light guide plate at an emergence angle between 0°~52°.

To summarize, through the edge-type light guide plate design disclosed in above embodiments, the guiding structure may be used for restricting and adjusting the propagation direction of the light entering the light  guide plate, and further controlling the emitting direction of the light and increasing the light extraction efficiency. The edge-type light guide plate design disclosed in above embodiments requires the use of only 1-2 or even nil brightness enhancement films for the light outputted from the front of the light guide plate to achieve the same light output as the existing backlight module design which requires the use of 3-4 brightness enhancement films. The range of emergence angle can be achieved by adjusting the guiding structure such as the angle of the slant surface in response to actual needs. Conditions such as guiding the light to be perpendicular to the normal direction of the light guide plate as much as possible, guiding the light towards a specific range of inclined angle, promptly extracting the light and delaying the extraction of the light can all be achieved through the simulation and calculation disclosed in above embodiments or the adjustment in partial or all design parameters of the guiding structure. Examples of the design parameters include the structural angles (φ and φ') of the guiding structure.

Furthermore, the edge-type light guide plate design disclosed in above embodiments can be used in various types of 2D or 3D displays such as the 2D or 3D displays which need to control the light outputted from the emergence angle of the light guide plate to a specific direction or range. The 2D or 3D displays can be realized through individual design and overall distribution of the guiding structure disclosed in above embodiments. For example, the edge-type light guide plate design can be used in a directional backlight type naked eye 3D display. Two light sources swiftly and alternately display different frames towards the left eye and the right eye. The backlight source at the right-hand side projects a left eye frame towards the left eye, and the backlight source at the left-hand side projects a right eye frame towards the right eye. The guiding structure collocated with directional backlight 3D display can be manufactured by using the principles of the light guide plate design disclosed in above embodiments. The light guide plate does not require any directional 3D films. With the use of a guiding structure collocated with a directional backlight 3D display and the use of a light guide plate, the viewer's two eyes, under the alternate and swift projection of the light sources at two sides, respectively receive dynamic frames and generate parallax, which provides stereoscopic viewing effect to the observer.

While the invention has been described by way of example and in terms of the preferred embodiment(s), it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

**Claims**

1.  A backlight module, comprising:

    a light guide plate comprising a plurality of guiding structures distributed on a bottom surface of the light guide plate and extending along an incident surface of the light guide plate, the guiding structure having a trapezoidal shape comprising a bottom portion, a top portion, a first slant surface and a second slant surface disposed oppositely, and the first and second slant surfaces connecting to the bottom portion and the top portion, wherein the bottom portions of the guiding structures are protruded from the bottom surface of the light guide plate, and alternatively, a patterned structure is formed between the adjacent guiding structures has and concave to the bottom surface of the light guide plate; and
    a light source disposed beside the light guide plate.

2.  The backlight module according to claim 1, wherein the patterned structure has a cross-section of trapezoidal or triangular shape.

3.  The backlight module according to claim 1, wherein the guiding structures distributed on the bottom surface area are configured as long columns.

4.  The backlight module according to claim 10, wherein a depth H of the guiding structure is defined as a vertical distance from the bottom portion to the top portion, the top portion has a length L along the propagation direction of a light, a first structural angle $\varphi'$ and a second structural angle $\varphi$ are respectively defined as an exterior angle of the first slant surface and an exterior angle of the second slant surface, and let the incident angle is denoted by $\theta$, then the light exits from the light guide plate if the incident angle $\theta$ satisfies the condition

$$\theta \geq \tan^{-1}(\frac{H}{L - H \times \cot \phi}).$$

5.  The backlight module according to claim 1, wherein in each guiding structure, the first structural angle $\varphi'$ is not equal to the second structural angle $\varphi$.

6.  The backlight module according to claim 1, wherein the first structural angle $\varphi'$ ranges between 30~45°, and the second structural angle $\varphi$ ranges between 45~60°.

7.  The backlight module according to claim 1, wherein the first structural angles $\varphi'$ of the guiding structures are not the same, and the second structural angles $\varphi$ are not the same either.

8.  The backlight module according to claim 1 having two light sources disposed on two sides of the light guide plate, wherein in each guiding structure, the first structural angle $\varphi'$ and the second structural angle $\varphi$ are the same or different from each other.

9.  The backlight module according to claim 1, wherein the value of H/L ratio is between 0.05-0.2.

10. The backlight module according to claim 1, further comprising a plurality of lenticular lenses disposed on an emission surface of the light guide plate and extended along a direction perpendicular to an extending direction of the guiding structures.

11 {
112
113
114

135 {
135c
135b
135a

13 {
131
132
137

## FIG. 1A (Prior Art)

131

1312

## FIG. 1B (Prior Art)

Z
Y
X

23a          23

21

23c          23g          23b

**FIG. 2A**

Z
Y
X

25          L1

L2

21          23g

23c          23b

23a

**FIG. 2B**

**FIG. 3A**

**FIG. 3B**

**FIG. 3C**

**FIG. 4A**

**FIG. 4B**

**FIG. 4C**

FIG. 4D

FIG. 5

FIG. 6

72g

72b  72

FIG. 7

82g

82b  82

FIG. 8

## FIG. 9A

Second structural angle φ

## FIG. 9B

FIG. 9C

FIG. 10

Europäisches
Patentamt

European
Patent Office

Office européen
des brevets

**EUROPEAN SEARCH REPORT**

Application Number

EP 13 17 1383

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 306 076 A1 (SONY CORP [JP]) 6 April 2011 (2011-04-06) * figure 1 * ----- | 1-9 | INV. F21V8/00 |
| X | US 6 259 854 B1 (SHINJI OSAMU [JP] ET AL) 10 July 2001 (2001-07-10) * figure 1a * ----- | 1 | |
| X | US 2009/040788 A1 (SHIAU TZENG-KE [TW] ET AL) 12 February 2009 (2009-02-12) * figure 4a * ----- | 1 | |
| X | US 2009/066880 A1 (SUGITA TATSUYA [JP] ET AL) 12 March 2009 (2009-03-12) * figures 1,3 * ----- | 1,10 | |
| | | | TECHNICAL FIELDS SEARCHED (IPC) G02B |

The present search report has been drawn up for all claims

| Place of search | Date of completion of the search | Examiner |
|---|---|---|
| Munich | 30 September 2013 | Jones, Julian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 17 1383

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2013

| Patent document cited in search report | | | Publication date | Patent family member(s) | | | Publication date |
|---|---|---|---|---|---|---|---|
| EP | 2306076 | A1 | 06-04-2011 | CN | 102066836 | A | 18-05-2011 |
| | | | | EP | 2306076 | A1 | 06-04-2011 |
| | | | | KR | 20110021898 | A | 04-03-2011 |
| | | | | TW | 201013117 | A | 01-04-2010 |
| | | | | US | 2011109533 | A1 | 12-05-2011 |
| | | | | WO | 2009157352 | A1 | 30-12-2009 |
| US | 6259854 | B1 | 10-07-2001 | US | 6259854 | B1 | 10-07-2001 |
| | | | | WO | 9854606 | A1 | 03-12-1998 |
| US | 2009040788 | A1 | 12-02-2009 | TW | 200907435 | A | 16-02-2009 |
| | | | | US | 2009040788 | A1 | 12-02-2009 |
| US | 2009066880 | A1 | 12-03-2009 | CN | 101382693 | A | 11-03-2009 |
| | | | | JP | 4566226 | B2 | 20-10-2010 |
| | | | | JP | 2009063918 | A | 26-03-2009 |
| | | | | US | 2009066880 | A1 | 12-03-2009 |

EPO FORM P0459

For more details about this annex : see Official Journal of the European Patent Office, No. 12/82